(19) **Europäisches Patentamt / European Patent Office / Office européen des brevets**

(11) **EP 2 358 828 B1**

(12) **FASCICULE DE BREVET EUROPEEN**

(45) Date de publication et mention
de la délivrance du brevet:
**14.11.2012 Bulletin 2012/46**

(21) Numéro de dépôt: **09799662.3**

(22) Date de dépôt: **07.12.2009**

(51) Int Cl.:
*C09D 9/00* (2006.01)     *C09D 9/04* (2006.01)
*C08K 5/06* (2006.01)     *C08K 5/10* (2006.01)
*E04F 13/00* (2006.01)

(86) Numéro de dépôt international:
**PCT/FR2009/001392**

(87) Numéro de publication internationale:
**WO 2010/076408 (08.07.2010 Gazette 2010/27)**

(54) **PROCEDE DE DEPOSE DE TOILES DE VERRE**

VERFAHREN ZUR ENTFERNUNG VON GLASFLIESEN

METHOD FOR REMOVING GLASS WEBS

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **19.12.2008 FR 0807189**

(43) Date de publication de la demande:
**24.08.2011 Bulletin 2011/34**

(73) Titulaire: **Bostik SA**
**92400 Courbevoie (FR)**

(72) Inventeurs:
• **LEROUX Sabine**
**F-77000 Melun (FR)**

• **NERY Laurent**
**F-94360 Bry sur Marne (FR)**

(74) Mandataire: **Granet, Pierre**
**Bostik SA**
**Département Propriété Intellectuelle**
**La Défense 6**
**16-32 rue Henri Regnault**
**92902 Paris La Défense Cedex (FR)**

(56) Documents cités:
**EP-A- 0 294 041     EP-A- 1 143 064**
**WO-A-98/56864     US-A1- 2006 058 208**

## Description

La présente invention a pour objet un procédé de dépose d'une toile de verre fixée par collage à un substrat.

La toile de verre est un revêtement mural qui est très utilisé pour la décoration des locaux, aussi bien des locaux d'habitation que ceux réservés à un usage professionnel, ou encore des locaux destinés à recevoir le public. Les fibres de verre extrêmement fines qui la composent et lui assurent sa solidité et sa résistance au feu, sont fabriquées par étirement, lorsque le verre est rendu malléable à haute température. C'est le tissage de ces fibres qui donne à la toile de verre son aspect caractéristique, et permet la réalisation d'effets esthétiques variés, notamment de texture, liés à une maille plus ou moins importante et à la réalisation de divers motifs en reliefs, par exemple en forme de losanges ou de chevrons.

La toile de verre peut être fixée sur différents substrats comme le béton, le plâtre ou le bois et est souvent utilisée dans le domaine de la rénovation, pour masquer les petites irrégularités de surface et les fissures des murs (ou des plafonds). La toile de verre est commercialisée sous la forme de rouleaux, et l'on procède à sa pose en découpant dans ceux-ci des lés de longueur adaptée, qui sont fixés au substrat au moyen de colles aqueuses à base de polymères naturels (éventuellement modifiés chimiquement) ou synthétiques. Une fois collée, la toile de verre dont l'aspect, à l'état brut, est très inesthétique, est obligatoirement peinte, avec souvent une première couche à base d'une peinture acrylique qui est généralement suivie d'une deuxième couche à base d'une peinture soit acrylique soit glycérophtalique. La peinture participe au renforcement mécanique de la toile de verre et à son adhésion sur le substrat.

Le revêtement mural ainsi obtenu possède une durabilité dans le temps particulièrement avantageuse. Toutefois, il peut être nécessaire au bout d'une certaine période d'utilisation, de le rafraîchir en lui appliquant une nouvelle couche de peinture. Le dépôt de plusieurs couches de peinture sur une toile de verre finit cependant par en masquer partiellement les motifs en relief, ce qui, avec le temps, compromet l'apparence désirée au niveau décoratif et rend dès lors sa dépose impérative.

On ne connaît toutefois pas actuellement de moyen simple et économique de procéder à une telle dépose.

C'est la raison pour laquelle il est généralement préconisé, lorsque l'on souhaite renouveler la décoration d'un mur revêtu d'une toile de verre, de masquer au préalable cette dernière en procédant à la pose d'un nouvel enduit, ce qui est une opération longue et difficile, du ressort d'un artisan spécialisé comme par exemple un plâtrier.

La demande de brevet européen EP 1 143 064 enseigne bien une alternative à cette solution, sous la forme d'une toile de verre "strippable" (ou décollable à sec), susceptible d'être obtenue par un procédé comprenant :

- la formation sur les 2 faces d'une toile de verre standard d'un premier revêtement, appliqué à partir d'une dispersion aqueuse d'amidon et d'un liant synthétique, puis
- la formation sur une seule des 2 faces de ladite toile d'un second revêtement, à partir d'une dispersion aqueuse de paraffine et de modifiant rhéologique, ledit revêtement ayant une fonction de couche de séparation. La toile de verre ainsi obtenue peut être fixée au moyen des colles conventionnelles, et peut, lorsque l'on souhaite procéder à sa dépose, être facilement retirée du mur manuellement avec une force modérée.

Un tel procédé a toutefois pour conséquence que la toile de verre ainsi obtenue est plus coûteuse en raison de l'ajout additionnel de matières premières et de la nécessité de procéder à une opération industrielle supplémentaire de séchage.

Un but de la présente invention est de permettre la dépose d'une toile de verre peinte fixée par collage à un mur, sans recourir à la toile de verre décollable à sec enseignée par la demande EP 1 143 064.

Un autre but de la présente invention est de proposer une composition assurant l'enlèvement facile d'une toile de verre peinte, sans entraîner de modification substantielle des couches de peinture qui la recouvrent ou de séparation entre celles-ci et la toile de verre.

Un autre but de la présente invention est de proposer un procédé mettant en oeuvre une composition, qui permette de retirer manuellement d'un seul tenant, lé par lé, et de façon aisée et propre, une toile de verre qui a été auparavant fixée par collage à un mur puis recouverte d'au moins une couche de peinture, tout en maintenant durant l'opération de retrait l'adhésion entre ladite couche et la toile de verre.

Il a à présent été trouvé que ces buts sont atteints en totalité ou en partie par le procédé qui est décrit ci-après.

La présente invention concerne donc un procédé de dépose d'une toile de verre fixée par collage à un substrat et recouverte d'au moins une couche de peinture, comprenant l'application sur la surface de ladite toile d'une quantité de 100 à 200 g/m$^2$ d'une émulsion comprenant :

- de 10 à 40 % d'un ester ou éther (A) ayant un volume molaire compris entre 90 et 200 ml/mole,
- de 0,1 à 3 % d'un tensio-actif non ionique (B) dont la balance hydrophile lipophile (ou HLB) est comprise entre 9 et 18,
- de 1 à 5 % d'un agent épaississant (C), et
- de 52 à 87 % d'eau.

Les pourcentages utilisés dans le présent texte pour indiquer la quantité d'un composant de l'émulsion sont, sauf mention contraire, des pourcentages poids/poids. Au sens du présent texte, il est précisé que l'article indéfini "un" qui précède la dénomination des composants de l'émulsion s'entend de "un ou plusieurs".

Il a été trouvé que cette émulsion permet, une fois appliquée sur un substrat (par exemple un mur) qui a été auparavant revêtu par collage d'une toile de verre peinte, d'en retirer facilement ladite toile, sans modification substantielle de la couche de peinture qui la recouvre. L'application de cette émulsion permet notamment d'éviter une fluidification de la couche de peinture ou encore son décollement partiel du substrat, par exemple sous forme de cloques. Il est ainsi possible de déposer la toile de verre d'un seul tenant, lé par lé, en tirant simplement pour la séparer du mur, tout en maintenant son adhésion à la (ou les) couche(s) de peinture qui la recouvre(nt), ce qui permet de conduire ce travail dans des conditions d'hygiène et de propreté très avantageuses.

Le volume molaire d'un composé chimique à l'état liquide est défini comme étant le volume occupé par une mole dudit composé. Il est facilement obtenu par calcul à partir de sa masse molaire et de sa densité.

On préfère utiliser un éther ou ester (A) ayant un volume molaire allant de 95 à 160 ml/mole.

Selon une variante préférée, on utilise comme composé (A) un diester aliphatique.

Selon une variante davantage préférée de l'invention, le composé (A) est un diester de formule (I) :

$$R^1\text{-O-OC-}(CH_2)_n\text{-CO-O-}R^1 \qquad (I)$$

dans laquelle $R^1$ représente un radical méthyle ou éthyle et n est un nombre entier égal à 2, 3 ou 4.

Les diesters de formule (I) sont des esters des acides adipique (de formule $COOH(CH_2)_4COOH$), glutarique (de formule $COOH(CH_2)_3COOH$) et succinique (de formule $COOH(CH_2)_2COOH$). Ces diesters sont facilement disponibles en quantités industrielles dans le commerce et à un coût avantageux, notamment sous la forme de mélanges comme par exemple l'Estasol® de la société Dow, qui est un mélange d'environ 20 % de succinate de diméthyle, 60 % de glutarate de diméthyle, et 20 % d'adipate de diméthyle.

L'adipate de diméthyle (densité de 1,062 et masse molaire de 174,19 g/mole) a pour volume molaire :

$$Vm = 174,19/1,062 = 164 \text{ ml/mole}$$

Le glutarate de diméthyle (densité de 1,087 et masse molaire de 160,17 g/mole) a pour volume molaire : 147 ml/mole.

Le succinate de diméthyle (densité de 1,120 et masse molaire de 146,14 g/mole) a pour volume molaire : 130 ml/mole.

Le volume molaire du mélange Estasol® tel que défini ci-dessus est d'environ 147 ml/mole.

L'émulsion mise en oeuvre dans le procédé selon l'invention comprend également de 0,1 à 3 % d'un tensio-actif non ionique (B) dont la balance hydrophile lipophile (ou HLB) est comprise entre 9 et 18. La balance hydrophile-lipophile est un indice bien connu de mesure du degré d'hydrophilie ou de lipophilie du tensio-actif (cf l'article de Griffin, W.C., Classification of surface-active agents by HLB, dans J. Soc. Cosmetic Chem. 1, 311 (1949)).

De tels tensio-actifs sont par exemple choisis parmi les alcools éthoxylés, les alkylphénols éthoxylés, les acides gras éthoxylés, telle l'huile de ricin éthoxylée, cette dernière étant disponible notamment auprès de la société Nufarm sous la dénomination OPARYL® EM60 avec un HLB d'environ 10,5.

Selon une variante préférée, le tensio-actif non ionique (B) est utilisé en combinaison avec de 0,5 à 3 % (sur la base du poids total de l'émulsion) d'un tensio-actif anionique (B') de formule $R^2\text{-}SO_3^-M^+$ dans laquelle $R^2$ est un radical alkyle ou alkylaryle et $M^+$ est un cation sodium ou potassium. La qualité de l'émulsion obtenue est alors avantageusement stable par rapport à la dureté de l'eau. De préférence (B') est un alkylbenzène sulfonate de sodium ou de potassium, comme par exemple le dodécyl benzène sulfonate (ou DDBS).

L'agent épaississant (C) compris dans l'émulsion a pour effet d'en contrôler les propriétés rhéologiques, et de favoriser ainsi son contact avec la toile de verre peinte lorsque celle-ci est fixée sur une paroi verticale, durant le temps nécessaire à son imprégnation. On peut citer parmi les agents épaississants utilisables :

- les dérivés de gomme, comme la gomme xanthane ou le guar,
- la farine de caroube, les alginates, l'amidon chimiquement modifié ou non et les dérivés de cellulose, comme l'hydroxyéthylcellulose.
- les dérivés d'argiles, ou encore
- l'alcool polyvinylique, les polyacrylates ou les polyvinylpyrrolidones.

On préfère encore mettre en oeuvre le procédé selon l'invention avec une émulsion comprenant de 10 à 35 % du composé (A), plus préférentiellement encore de 15 à 30 % de ce dernier, de 0,5 à 2 % du tensio-actif non ionique (B), de 2 à 4 % de l'agent épaississant (C) et de 62 à 82 % d'eau.

L'émulsion peut également comprendre en outre divers additifs tels qu' un agent anti-mousse, un colorant, un agent biocide, une base odorante (ou aromatique), une charge minérale épaississante ou encore un agent tensio-actif anionique choisi parmi un dérivé sulfate tel qu'un alkyléther sulfate de sodium, un dérivé phosphate tel qu'un alkyléther phosphate de sodium ou un alkylsulfosuccinate de sodium.

L'émulsion décrite précédememnt peut être préparée par simple mélange à température ambiante, sous agitation vigoureuse, de ses ingrédients. On peut procéder avantageusement en introduisant dans l'ordre : l'eau, les tensio-actifs (B) et le cas échéant (B'), puis les agents épaississants (C), et enfin les composés (A).

Le procédé selon l'invention est avantageusement mis en oeuvre en appliquant l'émulsion sur la surface de la toile de verre en une quantité de 125 à 175 g/m$^2$.

Le substrat sur lequel est fixée la toile de verre peut être du plâtre ou un enduit à base de plâtre (par exemple un enduit de lissage), du carton (par exemple des plaques de plâtre cartonnées), du béton ou encore du bois (massif ou sous forme de panneaux de particules), éventuellement recouverts d'un apprêt (par exemple de type acrylique). Le substrat se trouve de préférence compris dans une paroi verticale (ou mur) à l'intérieur d'un local.

La toile de verre est fixée au substrat par des colles aqueuses usuelles avec un extrait sec pouvant aller de 10 à 25%, à base de poly(acétate de vinyle) et/ou d'amidon, natif ou modifié chimiquement. La quantité appliquée est en général comprise entre 200 et 250 g/ m$^2$, exprimée sur la base du poids total de colle aqueuse.

Après fixation par collage, la toile de verre est recouverte d'au moins une couche de peinture généralement de type acrylique, et de préférence d'au moins une deuxième couche de peinture souvent de type acrylique ou glycérophtalique.

Dans le procédé selon l'invention, l'émulsion peut être commodément appliquée sur la surface de la toile de verre au moyen d'une brosse, d'un rouleau, d'un pinceau ou encore par pulvérisation.

Le procédé de dépose comprend également, après l'application de l'émulsion, une étape d'attente durant un temps allant de 10 minutes à 60 minutes, correspondant au temps d'action de l'émulsion, puis une étape d'enlèvement manuel de la toile de verre peinte sous la forme d'un lé d'un seul tenant, par un effort modéré de traction.

Les exemples suivants sont donnés à titre purement illustratif de l'invention et ne sauraient être interprétés pour en limiter la portée.

Exemple 1 : Emulsion comprenant 16 % du mélange Estasol® de diesters méthyliques (consistant environ de 20 % de succinate de diméthyle, 60 % de glutarate de diméthyle, et 20 % d' adipate de diméthyle) :

L'émulsion est préparée par mélange des ingrédients indiqués avec leur teneur dans le tableau suivant.

L'agent épaississant Collacral® VAL est une solution aqueuse de copolymère de vinylpyrrolidone disponible auprès de la société BASF. L'agent épaississant Tylose® H200000 YP2 est une hydroxyéthylcellulose disponible auprès de la société Shin Etsu.

L'efficacité de l'émulsion ainsi obtenue en vue de la dépose d'une toile de verre peinte est évaluée par le test suivant.

Test d'efficacité pour le décollement d'une toile de verre peinte :

On utilise comme substrat du carton, sous la forme d'une plaque de plâtre cartonnée carrée de 30 cm de côté qui a été recouverte d'un apprêt de type acrylique.

On procède au collage sur cette plaque d'un carré de même dimension découpé dans une toile de verre ayant une densité surfacique de 110 g/m$^2$ (Tess cottonline disponible dans le commerce). On applique pour cela au rouleau, à raison d'environ 220 g/m$^2$, une colle aqueuse qui comprend 14 % d'amidon de blé et 9 % d'une émulsion de poly (acétate de vinyle) pour 20 % d'extrait sec (colle Quelyd® Murale de la société Bostik).

On applique ensuite sur la toile de verre ainsi fixée une première couche d'une peinture acrylique, puis après 24 heures de séchage une deuxième couche identique.

On procède au test de décollement 1 mois après l'application de la deuxième couche.

Pour cela, on applique à la brosse sur la surface de la toile de verre peinte placée en position verticale l'émulsion à tester, à raison d'environ 150 g/m$^2$.

Après un temps d'attente de 10 minutes, 20 minutes ou de 40 minutes (selon le cas), on procède à une amorce de séparation en soulevant la toile au moyen d'une spatule introduite au voisinage d'un des bords, puis l'on essaie de décoller manuellement la toile de verre du substrat. On note la possibilité (ou l'impossibilité) ou bien la facilité (ou la difficulté) de décoller d'un seul tenant le carré de toile de verre du substrat.

La toile de verre se décolle facilement et proprement d'un seul tenant dès 10 minutes après l'application de l'émulsion, sans dégradation notable des couches de peinture qui la recouvrent.

Exemples 2 à 4 : Emulsions à base du mélange Estasol® de diesters méthyliques

On répète l'exemple 1 avec les émulsions dont les compositions sont indiquées dans le tableau. L'agent épaississant Hycryl® 0262 est une dispersion aqueuse de copolymère acrylique disponible auprès de la société Cray-Valley.

On obtient les mêmes résultats, pour les exemples 2 à 3.

Pour l'exemple 4, l'effort manuel nécessaire pour décoller la toile 10 minutes après l'application de l'émulsion est plus important qu'à l'exemple 1 : on note donc un décollement difficile. Cet effort devient toutefois sensiblement du même ordre lorsque l'on retire la toile 20 minutes après l'application de l'émulsion : on note donc un décollement facile.

Exemple 5 (comparatif) : Emulsion comprenant 5 % du mélange Estasol® de diesters méthyliques :

On répète l'exemple 1 avec la composition indiquée dans le tableau.

Il est impossible de décoller la toile de verre, même avec un temps d'attente de 40 minutes après l'application de l'émulsion.

Exemple 6 (comparatif) : Emulsion comprenant 45 % du mélange Estasol® de diesters méthyliques :

On répète l'exemple 5 avec la composition indiquée dans le tableau.

Il est impossible de décoller la toile de verre même avec un temps d'attente de 40 minutes après l'application de l'émulsion. De plus, on observe que l'émulsion a pour effet de fluidifier et décoller en partie les couches de peinture de la toile, notamment en formant des cloques.

Exemple 7 (comparatif) : Emulsion comprenant 16 % du mélange Coasol® de diesters diisobutyliques (consistant environ de 20 % de succinate de diisobutyle, 60 % de glutarate de diisobutyle, et 20 % d' adipate de diisobutyle) :

Le volume molaire de ce mélange, disponible auprès de la société Dow, est d'environ 258 ml/mole.

On répète l'exemple 1 avec la composition indiquée dans le tableau.

Il est impossible de décoller la toile de verre, même avec un temps d'attente de 40 minutes après l'application de l'émulsion.

Exemples 8 à 11 : Emulsions comprenant 16% de divers éthers :

On répète l'exemple 1 avec des émulsions dont les compositions sont indiquées dans le tableau et à base respectivement des éthers suivants :

- l'anisole (formule Phenyl-$OCH_3$) dont le volume molaire est de 109 ml/mole,
- le Diéthylène Glycol Diméthyl Ether, de formule $O(CH_2CH_2OCH_3)_2$ et avec un volume molaire de 95 ml/mole,
- le lactate d'éthyle, de formule $CH_3CH_2OCOCH(OH)CH_3$ et ayant un volume molaire de 115 ml/mole, et
- le 1,2-diméthoxybenzène, dont le volume molaire est de 127 ml/mole.

L'efficacité des émulsions obtenues est testée 40 minutes après leur application sur la toile de verre peinte. On obtient le même résultat qu'à l'exemple 1.

| Ingrédient | Teneur en % | | | | | | | | | | |
|---|---|---|---|---|---|---|---|---|---|---|---|
| | Ex. 1 | Ex. 2 | Ex. 3 | Ex. 4 | Ex. 5 (comp.) | Ex. 6 (comp.) | Ex. 7 (comp.) | Ex. 8 | Ex. 9 | Ex. 10 | Ex. 11 |
| (A) Mélange de diesters Estasol® | 16 | 16 | 16 | 30 | 5 | 45 | - | - | - | - | - |
| (A) Mélange de diesters Coasol® | - | - | - | - | - | - | 16 | - | - | - | - |
| (A) Anisole | - | - | - | - | - | - | - | 16 | - | - | - |
| (A) Diéthylène Glycol Diméthyl Ether | - | - | - | - | - | - | - | - | 16 | - | - |
| (A) Lactate d'éthyle | - | - | - | - | - | - | - | - | - | 16 | - |
| (A) 1,2-diméthoxybenzène | - | - | - | - | - | - | - | - | - | - | 16 |
| (B) OPARYL® EM60 | 1 | 0,1 | 2 | 1 | 1 | 1 | 1 | 1 | 1 | 1 | 1 |
| (B') DDBS | 1 | - | - | 1 | 1 | 1 | 1 | 1 | 1 | 1 | 1 |
| (C) Collacral® VAL | 2 | - | 2 | 2 | 2 | 2 | 2 | 2 | 2 | 2 | 2 |
| (C) Tylose® H200000 YP2 | 1,3 | 1,3 | 1,3 | 1,3 | 1,3 | 1,3 | 1,3 | 1,3 | 1,3 | 1,3 | 1,3 |
| (C) Hycryl® 0262 | - | 2 | - | - | - | - | - | - | - | - | - |
| Eau | 78,7 | 80,6 | 78,7 | 64,7 | 89,7 | 49,7 | 78,7 | 78,7 | 78,7 | 78,7 | 78,7 |

| Décollement de la toile de verre peinte | | | | | | | | | | | | |
|---|---|---|---|---|---|---|---|---|---|---|---|---|
| | Après 10 minutes | facile | facile | facile | difficile | im-possible | im-possible | impossible | nd | nd | nd | nd |
| | Après 20 minutes | nd | nd | nd | facile | im-possible | im-possible | impossible | nd | nd | nd | nd |
| | Après 40 minutes | nd | nd | nd | nd | im-possible | im-possible | impossible | facile | facile | facile | facile |

nd = non déterminé

EP 2 358 828 B1

**Revendications**

1. Procédé de dépose d'une toile de verre fixée par collage à un substrat et recouverte d'au moins une couche de peinture, comprenant l'application sur la surface de ladite toile d'une quantité de 100 à 200 g/m$^2$ d'une émulsion comprenant :

   - de 10 à 40 % d'un ester ou éther (A) ayant un volume molaire compris entre 90 et 200 ml/mole,
   - de 0,1 à 3 % d'un tensio-actif non ionique (B) dont la balance hydrophile lipophile (ou HLB) est comprise entre 9 et 18,
   - de 1 à 5 % d'un agent épaississant (C), et
   - de 52 à 87 % d'eau.

2. Procédé selon la revendication 1, **caractérisé en ce que** l'émulsion comprend un ester ou éther (A) ayant un volume molaire allant de 95 à 160 ml/mole.

3. Procédé selon l'une des revendications 1 ou 2, **caractérisé en ce que** le composé (A) est un diester aliphatique.

4. Procédé selon l'une des revendications 1 à 3, **caractérisé en ce que** le composé (A) est un diester de formule (I) :

$$R^1\text{-}O\text{-}OC\text{-}(CH_2)_n\text{-}CO\text{-}O\text{-}R^1 \qquad (I)$$

dans laquelle $R^1$ représente un radical méthyle ou éthyle et n est un nombre entier égal à 2, 3 ou 4.

5. Procédé selon l'une des revendications 1 à 4, **caractérisé en ce que** le tensio-actif non ionique (B) est utilisé en combinaison avec de 0,5 à 3 % d'un tensio-actif anionique (B') de formule $R^2\text{-}SO_3^-M^+$ dans laquelle $R^2$ est un radical alkyle ou alkylaryle et $M^+$ est un cation sodium ou potassium.

6. Procédé selon la revendication 5, **caractérisé en ce que** le tensio-actif anionique est un alkylbenzène sulfonate de sodium ou de potassium.

7. Procédé selon l'une des revendications 1 à 6, **caractérisé en ce que** l'émulsion comprend de 10 à 35 % du composé (A), de 0,5 à 2 % du tensio-actif non ionique (B), de 2 à 4 % de l'agent épaississant (C) et de 62 à 82 % d'eau.

8. Procédé selon l'une des revendications 1 à 7, **caractérisé en ce que** l'émulsion est appliquée sur la surface de la toile de verre en une quantité de 125 à 175 g/m$^2$.

9. Procédé selon l'une des revendications 1 à 8, **caractérisé en ce que** le substrat est du plâtre ou un enduit à base de plâtre, du carton, du béton ou encore du bois, éventuellement recouverts d'un apprêt.

10. Procédé selon l'une des revendications 1 à 9, **caractérisé en ce que** le substrat se trouve compris dans une paroi verticale à l'intérieur d'un local.

11. Procédé selon l'une des revendications 1 à 10, **caractérisé en ce qu'**il comprend également, après l'application de l'émulsion, une étape d'attente durant un temps allant de 10 minutes à 60 minutes, puis une étape d'enlèvement manuel de la toile de verre peinte sous la forme d'un lé d'un seul tenant, par un effort modéré de traction.

**Claims**

1. Process for removing a glass cloth adhesively attached to a substrate and covered with at least one coat of paint comprising the application, to the surface of said cloth, of an amount of 100 to 200 g/m$^2$ of an emulsion comprising:

   - from 10 to 40% of an ester or ether (A) having a molar volume of between 90 and 200 ml/mol,
   - from 0.1 to 3% of a nonionic surfactant (B), the hydrophilic-lipophilic balance (or HLB) of which is between 9 and 18,
   - from 1 to 5% of thickening agent (C), and
   - from 52 to 87% of water.

2. Process according to Claim 1, **characterized in that** the emulsion comprises an ester or ether (A) having a molar volume ranging from 95 to 160 ml/mol.

3. Process according to either of Claims 1 and 2, **characterized in that** the compound (A) is an aliphatic diester.

4. Process according to one of Claims 1 to 3, **characterized in that** the compound (A) is a diester of formula (I):

$$R^1\text{-O-OC-}(CH_2)_n\text{-CO-O-}R^1 \qquad (I)$$

in which $R^1$ represents a methyl or ethyl radical and n is an integer equal to 2, 3 or 4.

5. Process according to one of Claims 1 to 4, **characterized in that** the nonionic surfactant (B) is used in combination with from 0.5 to 3% of an anionic surfactant (B') of formula $R^2\text{-}SO_3^-M^+$, in which $R^2$ is an alkyl or alkylaryl radical and $M^+$ is a sodium or potassium cation.

6. Process according to Claim 5, **characterized in that** the anionic surfactant is a sodium or potassium alkylbenzenesulfonate.

7. Process according to one of Claims 1 to 6, **characterized in that** the emulsion comprises from 10 to 35% of the compound (A), from 0.5 to 2% of the nonionic surfactant (B), from 2 to 4% of the thickening agent (C) and from 62 to 82% of water.

8. Process according to one of Claims 1 to 7, **characterized in that** the emulsion is applied to the surface of the glass cloth in an amount of 125 to 175 $g/m^2$.

9. Process according to one of Claims 1 to 8, **characterized in that** the substrate is plaster or a plaster-based coating, board, concrete or wood, optionally covered with a finish.

10. Process according to one of Claims 1 to 9, **characterized in that** the substrate is found included in a vertical surface inside a property.

11. Process according to one of Claims 1 to 10, **characterized in that** it also comprises, after the application of the emulsion, a stage of waiting for a time ranging from 10 minutes to 60 minutes and then a stage of manually taking away the painted glass cloth in the form of a strip all in one piece by a moderate pulling effort.

**Patentansprüche**

1. Verfahren zum Entfernen eines Glasvlieses, das durch Kleben an einem Substrat befestigt und mit mindestens einer Farbschicht bedeckt ist, umfassend das Aufbringen auf die Oberfläche des Vlieses eine Menge von 100 bis 200 $g/m^2$ einer Emulsion, umfassend:

   - 10 bis 40 % eines Esters oder Ethers (A) mit einem Molvolumen im Bereich zwischen 90 und 200 ml/Mol,
   - 0,1 bis 3 % eines nicht ionischen Tensids (B), dessen Hydrophile-lipophile-Gleichgewicht (oder HLB) im Bereich zwischen 9 und 18 liegt,
   - 1 bis 5 % eines Verdickungsmittels (C), und
   - 52 bis 87 % Wasser.

2. Verfahren nach Anspruch 1, **dadurch gekennzeichnet, dass** die Emulsion einen Ester oder Ether (A) mit einem Molvolumen zwischen 95 und 160 ml/Mol umfasst.

3. Verfahren nach einem der Ansprüche 1 oder 2, **dadurch gekennzeichnet, dass** die Verbindung (A) ein aliphatischer Diester ist.

4. Verfahren nach einem der Ansprüche 1 bis 3, **dadurch gekennzeichnet, dass** die Verbindung (A) ein Diester mit der Formel (I) ist:

$$R^1\text{-O-OC-}(CH_2)_n\text{-CO-O-}R^1 \qquad (I)$$

wobei $R^1$ für einen Methyl- oder Ethylrest steht und n eine ganze Zahl gleich 2, 3 oder 4 ist.

5. Verfahren nach einem der Ansprüche 1 bis 4, **dadurch gekennzeichnet, dass** das nicht ionische Tensid (B) in Kombination mit 0,5 bis 3 % eines anionischen Tensids (B') mit der Formel $R^2\text{-}SO_3^-M^+$ verwendet wird, wobei $R^2$ ein Alkyl- oder Alkylarylrest ist und $M^+$ ein Natrium- oder Kaliumkation ist.

6. Verfahren nach Anspruch 5, **dadurch gekennzeichnet, dass** das anionische Tensid ein Natriumalkylbenzolsulfonat oder ein Kaliumalkylbenzolulfonat ist.

7. Verfahren nach einem der Ansprüche 1 bis 6, **dadurch gekennzeichnet, dass** die Emulsion 10 bis 35 % der Verbindung (A), 0,5 bis 2 % des nicht ionischen Tensids (B), 2 bis 4 % des Verdickungsmittels (C) und 62 bis 82 % Wasser umfasst.

8. Verfahren nach einem der Ansprüche 1 bis 7, **dadurch gekennzeichnet, dass** die Emulsion in einer Menge von 125 bis 175 g/m$^2$ auf die Oberfläche eines Glasvlieses aufgebracht wird.

9. Verfahren nach einem der Ansprüche 1 bis 8, **dadurch gekennzeichnet, dass** das Substrat Gips oder ein Putz auf Gipsbasis, Karton, Beton oder auch Holz ist, gegebenenfalls bedeckt mit einer Grundierung.

10. Verfahren nach einem der Ansprüche 1 bis 9, **dadurch gekennzeichnet, dass** sich das Substrat in einer vertikalen Wand im Innern eines Raums befindet.

11. Verfahren nach einem der Ansprüche 1 bis 10, **dadurch gekennzeichnet, dass** es, nach dem Aufbringen der Emulsion, auch einen Schritt des Wartens mit einer Dauer zwischen 10 Minuten und 60 Minuten, dann einen Schritt des manuellen Entfernens des bemalten Glasvlieses in Form einer Bahn an einem Stück durch eine moderate Zugkraft umfasst.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1143064 A

**Littérature non-brevet citée dans la description**

- **GRIFFIN, W.C.** Classification of surface-active agents by HLB. *J. Soc. Cosmetic Chem.,* 1949, vol. 1, 311